# EUROPEAN PATENT SPECIFICATION

(11) **EP 1 758 938 B1**
(45) Date of publication and mention of the grant of the patent: **15.05.2019**
(21) Application number: 05724853.6
(22) Date of filing: 07.03.2005
(51) Int. Cl.: C08B 11/02, C08B 11/20

(54) **PRODUCTION OF LOW MOLECULAR WEIGHT ETHYLCELLULOSE**
HERSTELLUNG VON ETHYLCELLULOSE MIT NIEDRIGEM MOLEKULARGEWICHT
PRODUCTION D'ETHYLCELLULOSE A FAIBLE POIDS MOLECULAIRE

(30) Priority: 26.05.2004 US 574599 P
(43) Date of publication of application: 07.03.2007
(73) Proprietor: Dow Global Technologies LLC, Midland, MI 48674 (US)
(72) Inventor: SPENCER, Michael, V., Midland, MI 48640 (US)
(74) Representative: Schaad, Balass, Menzl & Partner AG
(86) International application number: PCT/US2005/007396
(87) International publication number: WO 2005/118649

(56) References cited:
- GB-A- 736 303
- US-B1- 6 261 218
- DATABASE WPI Section Ch, Week 199216 Derwent Publications Ltd., London, GB; Class A97, AN 1992-129623 XP002330200 & JP 04 076072 A (HAKUTO KK) 10 March 1992 (1992-03-10)
- 2002, , XP002330199 Brochure "Product Data AQUALON® Ethylcellulose", 2 pages, ©2002 Retrieved from the Internet: URL:www.herc.com/aqualon/pharm/pharm_ data_sheets/images/pdf_files/452-7.pdf> [retrieved on 2005-05-30] page 1

## Description

The present invention relates to the production of low molecular weight ethylcellulose and to novel low molecular weight ethylcellulose.

### Background of the Invention

Ethylcelluloses are useful in a wide variety of industrial and pharmaceutical applications, for example in printing inks, paper coatings, tablet binders, controlled drug release applications and hydrophobic film formers.

Ethylcelluloses chemically belong to the class of cellulose ethers. Other well-known cellulose ethers are methylcellulose, hydroxyethyl cellulose, hydroxypropyl cellulose, hydroxyethylmethyl cellulose, hydroxypropylmethyl cellulose, and carboxymethyl cellulose, which are all classified as water-soluble cellulose ethers by the skilled artisans. The methylcelluloses and hydroxypropyl methylcelluloses are well known for their insolubility in hot water and their solubility in cold water. The production and end-uses of these cellulose ethers are adapted to this particular water solubility. High molecular weight methylcelluloses and hydroxypropyl methylcelluloses are typically produced by alkalizing a high molecular weight cellulose pulp with an alkaline hydroxide, and then etherifying the alkalized cellulose in a gas-phase or slurry process with a methylating agent, such as methyl chloride, and optionally a hydroxypropoxylating agent, such as propylene oxide, to form a high molecular weight cellulose ether. When the etherification reaction is run as a slurry process, the reactant methyl chloride is commonly used in excess and functions as a dispersion medium. The produced cellulose ether is typically washed with hot water to remove salt and other reaction by-products, dried and milled. The molecular weight of these cellulose ethers can then be reduced by depolymerizing the cellulose ether with hydrogen chloride and neutralizing the depolymerized cellulose ether with a basic compound, such as anhydrous sodium bicarbonate. Processes for depolymerizing cellulose ethers are described in U.S. Patent Nos. 3,391,135 and 6,261,218.

Ethylcelluloses have substantially different properties and behave much differently than the above-mentioned water-soluble cellulose ethers. According to Ullmann's Encyclopedia of Industrial Chemistry, ethylcellulose is water-soluble from an ethyl degree of substitution (DS) value of 0.7 up to about 1.7, which corresponds to an ethoxyl content of from 17.4 to 36.5 percent, and is organic-soluble above a DS value of 1.5, which corresponds to an ethoxyl content of more than 33.1 percent. Organic-soluble ethylcellulose is thermoplastic and can be extruded into plastic parts retaining their mechanical properties both in water and at low temperature.

According to Ullmann's Encyclopedia of Industrial Chemistry the process for producing ethylcellulose is carried out as follows: "Ethyl chloride is used as the etherifying agent. A temperature of about 110°C is required and the reaction time is 8 to 16 hours. The viscosity levels are adjusted by aging alkali cellulose before etherification or by controlled oxidation with air during the process. The efficiency of the etherification, i.e., the fraction of the consumed ethyl chloride that is converted into cellulose ether groups, increases with the concentration of the NaOH used for alkalization; in general, solutions of 55 - 76 % NaOH are applied. Greater efficiency is achieved in a two-stage process by adding solid alkali to the reaction mass after the initial amount of NaOH has been consumed. Salts are removed from the crude product by successive washing with water."

It is well known that the production of ethylcellulose as described in Ullmann's Encyclopedia of Industrial Chemistry is carried out in the presence of an organic solvent. According to the above described process ethylcellulose having an ethoxyl content of from 40 to 55 percent and a viscosity between about 10 mPa·s and about 400 mPa·s can be efficiently produced. The viscosity is measured as a 5 weight percent solution in toluene and ethanol at a volume ratio of 80:20 at 25°C. At a viscosity of less than about 5 mPa·s the water solubility of the ethylcellulose significantly increases, which results in a substantial product loss when the crude product is washed with water for removing salt. For example, when an ethylcellulose having an ethoxyl content of 40 to 55 percent and a viscosity of about 4 mPa·s is washed at 50-70°C, the product loss can be as high as 20 percent. This is very disadvantageous since various grades of ethylcelluloses are produced in large scale production plants at amounts of thousands of metric tons per year.

Accordingly, one object of the invention is to provide a new process for the efficient production of ethylcellulose having an ethoxyl content of from 40 to 55 percent.

### Summary of the Invention

The invention is defined by the appendant claims. The description that follows is subject to this limitation.

One aspect of the present invention is a process for producing an ethylcellulose having an ethoxyl content of from 40 to 55 percent and a viscosity of from 1 to 100 mPa's, measured as a 5 weight percent solution in toluene and ethanol at a volume ratio of 80:20 at 25°C, which process comprises the step of depolymerizing an ethylcellulose having an ethoxyl content of from 40 to 55 percent and a viscosity of from 4 to 400 mPa·s in the presence of gaseous hydrogen halide to achieve a reduction in viscosity of the ethylcellulose of at least 10 percent and packaging the depolymerized ethylcellulose without a neutralization step after depolymerization.

Another aspect of the present invention is a process for producing an ethylcellulose having an ethoxyl content of from 40 to 55 percent and a viscosity of from 1 to 100 mPa's, which process comprises the steps of a) etherifying alkalized cellulose with ethyl chloride in the presence of an organic solvent to produce an ethylcellulose having an ethoxyl content of from 40 to 55 percent and a viscosity of from 4 to 400 mPa·s and b) depolymerizing the produced ethylcellulose in the presence of gaseous hydrogen halide to achieve a reduction in viscosity of the ethylcellulose of at least 10 percent.

Yet another aspect of the present invention is an ethylcellulose having an ethoxyl content of from 40 to 55 percent and a viscosity of from 1 to 2.5 mPa's, measured as a 5 weight percent solution in toluene and ethanol at a volume ratio of 80:20 at 25°C.

Surprisingly, it has been found that by the process of the present invention ethylcellulose of low molecular weight can be produced in an efficient manner and without undue waste production. Surprisingly, it has also been found that by the process of the present invention new ethylcellulose of very low molecular weight can be produced which was not available using a process known in the art.

### Detailed Description of the Invention

The Standard Test Methods for determining the properties of ethylcellulose are described in ASTM D914-00 and in the documents referenced therein.

By the process of the present invention low molecular weight ethylcellulose having an ethoxyl content of from 40 to 55 percent, preferably from 43 to 53 percent, more preferably from 45 to 52 percent is produced. The percent ethoxyl substitution is based on the weight of the substituted product and determined according to a Zeisel gas chromatographic technique as described in ASTM D4794-94(2003). These ethoxyl contents correspond to an ethyl DS of from 1.9 to 3.0, preferably from 2.1 to 2.9, more preferably from 2.3 to 2.8.
The molecular weight of the ethylcellulose is expressed as the viscosity of a 5 weight percent solution of the ethylcellulose measured at 25°C in a mixture of 80 volume percent toluene and 20 volume percent ethanol. The ethylcellulose concentration is based on the total weight of toluene, ethanol and ethylcellulose. The viscosity is measured using Ubbelohde tubes as outlined in ASTM D914-00 and as further described in ASTM D446-04, which is referenced in ASTM D914-00. The ethylcellulose produced according to the process of the present invention generally has a viscosity of from 1.0 mPa·s, preferably from 1.5 mPa·s, more preferably from 2.0 mPa·s; to 100 mPa·s, preferably to 50 mPa·s, more preferably to 10 mPa·s, most preferably to 7 mPa's. Surprisingly, ethylcellulose which has a viscosity of up to and including 4 mPa·s, most preferably up to and including 3 mPa·s can be produced in an efficient manner and without undue waste production. Ethylcelluloses having a viscosity of from 1.0 to 2.5 mPa·s, preferably from 1.0 to 2.3 mPa·s, more preferably from 1.0 to 2.0 mPa·s are novel.

The starting material used in the depolymerization step of the process of the present invention has the above-mentioned ethoxyl content and a viscosity of from 4 to 400 mPa·s, preferably from 4 to 100 mPa·s, more preferably from 5 to 50 mPa·s, most preferably from 7 to 20 mPa·s, measured as a 5 weight percent solution at 25°C in a mixture of 80 volume percent toluene and 20 volume percent ethanol. By the depolymerization step in the process of the present invention a reduction in viscosity of the ethylcellulose of at least 10 percent, preferably at least 20 percent, more preferably at least 30 percent is achieved, based on the viscosity of the starting material used in the depolymerization step. The starting material used for depolymerization can be produced in a known manner by alkalizing cellulose pulp and etherifying the alkalized cellulose with ethyl chloride in the presence of an organic solvent. The alkalization of cellulose pulp is well known. Preferably sodium hydroxide is used. The molecular weight of the alkalized cellulose is preferably adjusted by aging the alkalized cellulose. The alkalized cellulose is then contacted with ethyl chloride in an organic solvent, preferably an aromatic hydrocarbon, such as toluene or benzene, a C₁₋₆ alcohol, such as ethanol; a mixture of a hydrocarbon and a C₁₋₆ alcohol, such as a toluene/ethanol mixture; an ester, a ketone, or an ether of low molecular mass, preferably a molecular mass of up to 150, such as ethyl acetate or methyl acetate; or a halogenated hydrocarbon, preferably a chlorinated hydrocarbon, such as methylene chloride. The ethylation of the alkali cellulose is preferably conducted at a temperature of from 120 to 160°C, more preferably from 130 to 150°C during a time period of from 6 to 10 hours, more preferably 7 to 9 hours. The reaction mixture is then cooled and typically ethanol is added to stop the etherification reaction. The produced reaction mixture is generally subjected to a filtration step to remove some of the sodium chloride salt that is formed as a by-product. The produced ethylcellulose can be recovered from the reaction mixture by evaporation of the organic solvent. Further purification of the ethylcellulose can be achieved by washing it with water, preferably at a temperature of from 40 to 100°C, more preferably from 50 to 70°C. Purified ethylcellulose is preferably compressed to a sheet and subsequently subjected to a grinding process known in the art. Ethylcelluloses produced according to the above-mentioned process are commercially available from The Dow Chemical Company. Various grades are commercially available under the trademark ETHOCEL and have viscosities between 3 mPa·s and 385 mPa·s and an ethoxyl content of from 45 to 52 percent.

The depolymerization process of the present invention is preferably carried out in the absence of a reaction diluent. Preferably, undiluted ethylcellulose is contacted with gaseous hydrogen halide, more preferably gaseous hydrogen chloride, most preferably anhydrous hydrogen chloride. Hydrogen chloride can be added directly into the ethylcellulose or, preferably, to the headspace. The headspace may be purged with an inert gas, such as nitrogen, to prevent combustion or ignition of the ethylcellulose. The depolymerization temperature preferably is from 50 to 110°C, more preferably from 65 to 100°C. The amount of gaseous hydrogen chloride is preferably from 0.05 to 1 percent, more preferably from 0.1 to 0.5 percent, based on the total weight of the ethylcellulose to be polymerized.

It has been found that the reaction speed can be increased and the discoloration of the ethylcellulose during depolymerization can be minimized if the water content at the beginning of the polymerization reaction is from 0.5 to 5.0 percent, preferably from 1.0 to 4.0 percent, more preferably from 1.0 to 3.0 percent, most preferably from 1.2 to 2.5 percent, based on the total weight of dry ethylcellulose and water. The water content is preferably regulated by controlling the water content of the ethylcellulose to be depolymerized, for example by producing ethylcellulose of the desired water content in the etherification and purifications steps which precede the depolymerization or by addition of the desired amount of water before the depolymerization. The duration of the depolymerization depends on various factors, such as the viscosity of the starting material, the desired viscosity of the depolymerized product, the water content and the temperature during depolymerization. Generally the depolymerization period is from 1 to 12 hours, preferably from 2 to 10 hours. Preferably, ethylcellulose does not come into contact with surfaces which contain iron during manufacture or depolymerization since the presence of iron may catalyze the depolymerization reaction at the contact surfaces which may lead to a less uniform depolymerization rate and the formation of carbonaceous tars. The depolymerization can be stopped by cooling the reaction mixture, preferably to a temperature of 40 °C or less.

If desired, the hydrogen halide, such as hydrogen chloride can be removed from the depolymerized ethylcellulose, for example by stripping with an inert gas, such as nitrogen. Depolymerized ethylcellulose is packaged without a neutralization step after depolymerization. By avoiding a neutralization step before the depolymerized ethylcellulose is packaged for transportation and usage, contamination with a basic compound can be avoided. Surprisingly it has been found that the depolymerized ethylcellulose has an unexpectedly high shelf life, even if some or all of the used hydrogen chloride is still present in the depolymerized ethylcellulose. Over 4 months under storage at 4 °C, a viscosity drop of less than 1.5% of the final viscosity is observed.

The low molecular weight ethylcellulose is useful in a wide variety of applications. The depolymerized ethylcellulose is preferably dissolved in an organic solvent listed below for the various end-uses. Preferred application areas are personal care applications, such as hair care, skin care or oral care applications; or food, feed, agricultural or veterinary applications. The ethylcellulose is useful for providing a hydrophobic film to personal care compositions which results in water resistance, extended wear resistance and improved delivery of water-insoluble active substances in antiperspirants, lipsticks, sunscreens, nail polishes, cosmetics, particularly cosmetics designed to last long, hair conditioners or oral care products. The low molecular weight ethylcellulose is also useful as a thickener, for example in oral care applications, perfumes, hair conditioners, water-in-oil emulsions, or in the organic phase of aqueous emulsions.

The novel ethylcellulose which has an ethoxyl content of from 40 to 55 percent and a viscosity of 1 to 2.5 mPa·s has significant advantages in various applications, as compared to known ethylcellulose having a higher viscosity. It has been found that the novel ethylcellulose generally leads to less nozzle clogging in spray drying techniques than know ethylcellulose of higher viscosity. Furthermore, the novel ethylcellulose is soluble at higher concentrations in organic solvents than known ethylcellulose of higher viscosity. Exemplary of useful organic solvents are aromatic hydrocarbons, such as toluene or benzene; C₁₋₆ alcohols, such as ethanol or isopropanol; other aliphatic alcohols, such as octyl alcohol, cyclic alcohols, such as methyl cyclohexanol; mixtures of a hydrocarbon and a C₁₋₆ alcohol, such as toluene/ethanol mixtures; esters, such as ethyl acetate or n-butyl lactate; ketones, such as acetone, or ethers such as dioxane; halogenated hydrocarbons, preferably chlorinated aliphatic and aromatic hydrocarbon, such as methylene chloride or monochlorobenzene; or saturated cyclic hydrocarbons, such as cyclohexane. Typically, the novel ethylcellulose is also more soluble in the above-mentioned solvents, that is solutions of higher concentrations can be obtained, or more readily soluble in water than known ethylcellulose of higher viscosity.

Due to the advantages mentioned above, the novel low viscosity ethylcellulose is particularly useful for providing films or coatings to various substrates, such as oral solid dosage forms, feed, nutritional supplements, agricultural dosage forms, cleaning applications, deodorizers, flavor enhancers, cosmetics or veterinary applications. The ability to spray the ethylcellulose at higher polymer concentration provides better water barrier properties and possibly a slow release of the active ingredient. Accordingly, the novel low viscosity ethylcellulose is very useful in pharmaceutical applications, particularly for tablet coatings and controlled drug release films.

The ability to spray the low molecular weight ethyl cellulose at high polymer concentration and the fast dissolution of the ethylcellulose in organic-solvents render the ethylcellulose also very useful for taste masking and as flavor fixatives in oral solid dosage forms, liquid suspensions, feed, veterinary applications and nutritional supplements. The mentioned advantages render the ethylcellulose also very useful for microencapsulation techniques for producing oral solid dosage forms, veterinary and agricultural applications, food, feed, nutritional supplements and cosmetics. The mentioned advantages render the ethylcellulose also very useful for preparing granules for the above-mentioned uses or as tablet binders.

Furthermore the ethylcellulose of the present invention or produced according to the present invention is useful for preparing extruded films which are useful in transdermal applications, oral care, buccal, wound care, food, feed or veterinary applications, for enrobing solid dosage forms with extruded films or for extrusion spheronization. The ethylcellulose can be blended with one or more other polymers for preparing extruded films.

Furthermore, the ethylcellulose of the present invention or produced according to the present invention is useful in a variety of other applications, for example in inks such as packaging inks, conductive inks, ink-jet inks, paste inks for printing circuit patterns; in electronic applications, such as multi-layer ceramic chips (MLCC), plasma display panels (PDP), liquid crystal displays (LCD); in batteries, fuel cells, ceramics, varnishes, such as tough, long-lasting surface finishes; rocket tapes, conductive pastes, fabric coatings, strippable coatings, paper coatings, lacquers or in adhesives, particularly hot-melt adhesives.

The following examples illustrate the present invention and should not be construed to limit the scope of the invention. Unless otherwise indicated all parts and percentages are by weight. Unless otherwise mentioned, the viscosities are measured as a 5 weight percent solution in toluene and ethanol at a volume ratio of 80:20 at 25°C using Ubbelohde tubes as outlined in ASTM D914-00 and as further described in ASTM D446-04, which is referenced in ASTM D914-00.

### Example 1

A powdered ethylcellulose which is commercially available from The Dow Chemical Company under the trademark ETHOCEL Std 10 is used for depolymerization. It has an ethoxyl content of 48.0 - 49.5 percent and a measured viscosity of 8.8 mPa·s. The moisture content of the ethylcellulose is adjusted to 2.0 percent water, based on the weight of the moist ethylcellulose. The ethylcellulose is placed in a vial, and preheated in a lab oven to 90° Celsius. Anhydrous hydrogen chloride is then injected through a septum in the vial's top, using a hypodermic needle, and then the vial is shaken thoroughly to ensure good distribution of the hydrogen chloride throughout the powdered ethylcellulose. The vial is then placed back in the lab oven. 0.30 weight percent of hydrogen chloride is added, based on the weight of the ethylcellulose. After a certain time period, as listed in Table 1 below, the vial is withdrawn from the oven and cooled in ice water to stop the reaction. The sample is then removed from the vial, and dissolved in a mixture of toluene and ethanol at a volume ratio of 80:20 at a concentration of 5 percent by weight, based on the total weight of toluene, ethanol and ethylcellulose. The viscosity of this solution is measured at 25°C. The results from a typical trial are shown in Table 1.

**Table 1**

| **Run** | **Reaction Time (min)** | **Final Viscosity (mPa·s)** |
|---|---|---|
| | 0 (comparative run) | 8.8 |
| 1A | 85 | 4.6 |
| 1B | 110 | 4.2 |
| 1C | 192 | 3.7 |
| 1D | 204 | 3.0 |
| 1E | 260 | 2.4 |
| 1F | 372 | 1.8 |

The viscosities of the ethylcellulose produced according to Example IF are measured at various concentrations in various solvents at 25°C using a Brookfield viscosimeter. The listed concentrations are by weight, based on the total weight of the solution. The viscosities are compared with the corresponding viscosities of a powdered ethylcellulose which is commercially available from The Dow Chemical Company under the trademark ETHOCEL Std 4 which has an ethoxyl content of 48.0 - 49.5 percent and a viscosity of 4.5 mPa·s, measured as a 5 weight percent solution in toluene and ethanol at a volume ratio of 80:20 at 25°C.

**Table 2**

| **Solvent, concentration of ethylcellulose** | **Viscosity of ethylcellulose of Example 1F (mPa·s)** | **Viscosity of ETHOCEL Std 4 ethylcellulose (mPa·s)** |
|---|---|---|
| Ethanol, 10% | 9.1 | 39.6 |
| Ethanol, 30% | 381 | Not measured, gelled |
| Toluene/ethanol*, 10% | 6.2 | 26.4 |
| Toluene/ethanol*, 30% | 136 | > 2000 |
| Toluene/ethanol*, 40% | 893 | > 2000 |

| | | |
|---|---|---|
| * Toluene/ethanol at volume ratio of 80:20 | | |

Table 2 illustrates that the novel ethylcellulose of the present invention can be dissolved at higher concentrations in organic solvents than known ethylcellulose. Furthermore, at higher concentrations in various organic solvents, such as 10 or 30 weight percent, the viscosity of the ethylcellulose produced according to Example IF is much lower than the viscosity of ETHOCEL Std 4. Moreover, 30 percent solutions of the ethylcellulose produced according to Example IF in ethanol or a toluene/ethanol blend are sprayable according to known techniques, whereas 30 percent solutions of ETHOCEL Std 4 in the same solvents are not sprayable.

### Examples 2 to 6

Example 1 is repeated except that ETHOCEL Std 20 is used for depolymerization which has an ethoxyl content of 48.0 - 49.5 percent and a measured viscosity of 19.2 mPa·s. Furthermore, the water content is adjusted as listed in Table 3 below and in each of the Examples the reaction time is 60 minutes.

**Table 3**

| **Example** | **Water content (percent) during polymerization** | **Final viscosity (mPa·s)** |
|---|---|---|
| Starting material without depolymerization (comparative) | (not depolymerized) | 19.2 |
| 2 | 1.1 | 9.8 |
| 3 | 1.6 | 6.8 |
| 4 | 2.3 | 7.6 |
| 5 | 3.8 | 12.5 |
| 6 | 3.9 | 13.7 |

| | | |
|---|---|---|
| ¹ based on the weight of the moist ethylcellulose | | |

## Claims

1. A process for producing an ethylcellulose having an ethoxyl content of from 40 to 55 percent and a viscosity of from 1 to 100 mPa·s, measured as a 5 weight percent solution in toluene and ethanol at a volume ratio of 80: 20 at 25°C, which process comprises the step of depolymerizing an ethylcellulose having an ethoxyl content of from 40 to 55 percent and a viscosity of from 4 to 400 mPa's in the presence of gaseous hydrogen halide to achieve a reduction in viscosity of the ethylcellulose of at least 10 percent and packaging the depolymerized ethylcellulose without a neutralization step after depolymerization.

2. The process of Claim 1 wherein an ethylcellulose having an ethoxyl content of from 40 to 55 percent and a viscosity of from 1 to 10 mPa's is produced.

3. The process of Claim 1 or 2 wherein the depolymerization is conducted in the presence of gaseous hydrogen chloride.

4. The process of any one of Claims 1 to 3 wherein the depolymerization step is conducted in the presence of from 0.5 to 5.0 percent of water, based on the weight of the ethyl cellulose.

5. The process of any one of Claims 1 to 4 wherein the depolymerization step is conducted in the presence of from 0.1 to 0.5 weight percent of hydrogen chloride, based on the total weight of ethylcellulose to be depolymerized.

6. The process of any one of Claims 1 to 5 wherein a reduction in viscosity of the ethylcellulose of at least 30 percent is achieved.

7. The process of any one of Claims 1 to 6 wherein an ethylcellulose having a viscosity of from 4 to 100 mPa's is depolymerized to an ethylcellulose having a viscosity of from 1 to 2.5 mPa·s.

8. The process of any one of Claims 1 to 7 wherein the step of depolymerizing the ethylcellulose is preceded by the step of etherifying alkalized cellulose with ethyl chloride in the presence of an organic solvent to produce an ethylcellulose having an ethoxyl content of from 40 to 55 percent and a viscosity of from 4 to 400 mPa·s.

9. An ethylcellulose having an ethoxyl content of from 40 to 55 percent and a viscosity of from 1 to 2.5 mPa's, measured as a 5 weight percent solution in toluene and ethanol at a volume ratio of 80 : 20 at 25°C producible by the process of any one of Claims 1 to 8.

10. The ethylcellulose of Claim 9 having a viscosity of from 1 to 2.3 mPa·s.

11. The ethylcellulose of Claim 9 or Claim 10 having an ethoxyl content of from 45 to 52 percent.

12. Use of the ethylcellulose of any one of Claims 9 to 11 for preparing a tablet coating or a film for controlled drug release.

## Patentansprüche

1. Ein Verfahren zur Herstellung einer Ethylcellulose mit einem Ethoxyl-Gehalt von 40 bis 55 Prozent und einer Viskosität von 1 bis 100 mPa·s, gemessen als Lösung von 5 Gewichtsprozent in Toluol und Ethanol bei einem Volumenverhältnis von 80:20 bei 25°C, wobei das Verfahren den Schritt umfasst, dass eine Ethylcellulose mit einem Ethoxyl-Gehalt von 40 bis 55 Prozent und einer Viskosität von 4 bis 400 mPa·s in Anwesenheit eines gasförmigen Halogenwasserstoffs depolymerisiert wird, um eine Reduktion der Viskosität der Ethylcellulose von wenigstens 10 Prozent zu erhalten, und dass die depolymerisierte Ethylcellulose ohne Neutralisierungsschritt nach der Depolymerisierung verpackt wird.

2. Das Verfahren nach Anspruch 1, wobei eine Ethylcellulose mit einem Ethoxylgehalt von 40 bis 55 Prozent und einer Viskosität von 1 bis 10 mPa·s hergestellt wird.

3. Das Verfahren nach Anspruch 1 oder 2, wobei die Depolymerisation in der Anwesenheit von gasförmigem Chlorwasserstoff durchgeführt wird.

4. Das Verfahren gemäss einem der Ansprüche 1 bis 3, wobei der Depolymerisationsschritt in der Anwesenheit von 0.5 bis 5.0 Prozent Wasser, basierend auf dem Gewicht der Ethylcellulose, durchgeführt wird.

5. Das Verfahren nach einem der Ansprüche 1 bis 4, wobei der Depolymerisationsschritt in der Anwesenheit von 0.1 bis 0.5 Gewichtsprozent Chlorwasserstoff, basierend auf dem Gesamtgewicht der zu depolymerisierenden Ethylcellulose, durchgeführt wird.

6. Das Verfahren nach einem der Ansprüche 1 bis 5, wobei eine Reduktion der Viskosität der Ethylcellulose von wenigstens 30 Prozent erhalten wird.

7. Das Verfahren nach einem der Ansprüche 1 bis 6, wobei eine Ethylcellulose mit einer Viskosität von 4 bis 100 mPa·s zu einer Ethylcellulose mit einer Viskosität von 1 bis 2.5 mPa·s depolymerisiert wird.

8. Das Verfahren nach einem der Ansprüche 1 bis 7, wobei dem Schritt der Depolymerisierung der Ethylcellulose ein Schritt vorausgeht, in dem alkalisierte Cellulose mit Ethylchlorid in Gegenwart eines organischen Lösungsmittels verethert wird, um eine Ethylcellulose mit einem Ethoxylgehalt von 40 bis 55 Prozent und einer Viskosität von 4 bis 400 mPa·s zu erhalten.

9. Eine Ethylcellulose mit einem Ethoxylgehalt von 40 bis 55 Prozent und einer Viskosität von 1 bis 2.5 mPa·s, gemessen als Lösung von 5 Gewichtsprozent in Toluol und Ethanol bei einem Volumenverhältnis von 80:20 bei 25°C, herstellbar durch das Verfahren nach einem der Ansprüche 1 bis 8.

10. Die Ethylcellulose nach Anspruch 9 mit einer Viskosität von 1 bis 2.3 mPa·s.

11. Die Ethylcellulose nach Anspruch 9 oder 10 mit einem Ethoxylgehalt von 45 bis 52 Prozent.

12. Verwendung der Ethylcellulose nach einem der Ansprüche 9 bis 11 zur Herstellung einer Tablettenbeschichtung oder eines Films zur kontrollierten Wirkstoffabgabe.

## Revendications

1. Procédé pour produire une éthylcellulose ayant un contenu d'éthoxyle de 40 à 55 pourcents et une viscosité de 1 à 100 mPa.s, mesurée comme une solution de 5 pourcents en poids dans du toluène et de l'éthanol à un rapport de volume de 80 : 20 à 25°C, ledit procédé comprenant l'étape de dépolymérisation d'une éthylcellulose ayant un contenu d'éthoxyle de 40 à 55 pourcents et une viscosité de 4 à 400 mPa.s en présence d'halogénure d'hydrogène gazeux pour atteindre une réduction en viscosité de l'éthylcellulose d'au moins 10 pourcents et d'emballage de l'éthylcellulose dépolymérisée sans étape de neutralisation après dépolymérisation.

2. Procédé selon la revendication 1, une éthylcellulose ayant un contenu d'éthoxyle de 40 à 55 pourcents et une viscosité de 1 à 10 mPa.s étant produite.

3. Procédé selon la revendication 1 ou 2, la dépolymérisation étant conduite en présence de chlorure d'hydrogène gazeux.

4. Procédé selon l'une quelconque des revendications 1 à 3, l'étape de dépolymérisation étant conduite en présence de 0.5 à 5.0 pourcents d'eau, basé sur le poids d'éthylcellulose.

5. Procédé selon l'une quelconque des revendications 1 à 4, l'étape de dépolymérisation étant conduite en présence de 0.1 à 0.5 pourcent en poids de chlorure d'hydrogène, basé sur le poids total d'éthylcellulose à dépolymériser.

6. Procédé selon l'une quelconque des revendications 1 à 5, une réduction en viscosité de l'éthylcellulose d'au moins 30 pourcents étant atteinte.

7. Procédé selon l'une quelconque des revendications 1 à 6, une éthylcellulose ayant une viscosité de 4 à 100 mPa.s étant dépolymérisée en une éthylcellulose ayant une viscosité de 1 à 2.5 mPa.s.

8. Procédé selon l'une quelconque des revendications 1 à 7, l'étape de dépolymérisation de l'éthylcellulose étant précédée par une étape d'éthérification d'une cellulose alcalinisée avec un chlorure d'éthyle en présence d'un solvant organique pour produire une éthylcellulose ayant un contenu d'éthoxyle de 40 à 55 pourcents et une viscosité de 4 à 400 mPa.s.

9. Éthylcellulose ayant un contenu d'éthoxyle de 40 à 55 pourcents et une viscosité de 1 à 2.5 mPa.s, mesurée comme une solution de 5 pourcents en poids dans du toluène et de l'éthanol à un rapport de volume de 80 : 20 à 25°C, qui peut être produite par le procédé selon l'une quelconque des revendications 1 à 8.

10. Éthylcellulose selon la revendication 9 ayant une viscosité de 1 à 2.3 mPa.s.

11. Éthylcellulose selon la revendication 9 ou 10 ayant un contenu d'éthoxyle de 45 à 52 pourcents.

12. Utilisation de l'éthylcellulose selon l'une quelconque des revendications 9 à 11 pour préparer un enrobage de comprimé ou un film pour une libération contrôlée de médicament.
